# EUROPEAN PATENT SPECIFICATION

(11) **EP 2 058 960 B1**
(45) Date of publication and mention of the grant of the patent: **22.02.2017**
(21) Application number: 07291342.9
(22) Date of filing: 08.11.2007
(51) Int. Cl.: H04B 10/077, H04B 10/079

(54) **Method for estimating the quality of transmission of a signal in an optical network**
Verfahren zur Einschätzung der Übertragungsqualität eines Signals in einem optischen Netzwerk
Procédé d'évaluation de la qualité de transmission d'un signal dans un réseau optique

(43) Date of publication of application: 13.05.2009
(73) Proprietor: ALCATEL LUCENT, 92100 Boulogne-Billancourt (FR)
(72) Inventor: Zami, Thierry, 91300 Massy (FR); Borne, Sophie, 91590 La Ferte Alais (FR)
(74) Representative: Croonenbroek, Thomas Jakob

(56) References cited:
- WO-A-01/84746
- WO-A-2004/019073
- WO-A2-2005/082035
- US-A1- 2002 097 460
- US-A1- 2004 165 888
- US-B1- 6 771 904

## Description

### BACKGROUND OF THE INVENTION

The present invention relates to the field of routing in optical communication networks.

Optical communication networks mainly consist of nodes connected together via optical links. A node is in general connected to one or several other nodes and several paths usually exist to go from one node to another. Thus, a method for routing is needed to route the different signals from their source node to their destination node.

Nowadays, wavelength division multiplexing (WDM) is used in order to increase optical networks capacity. Wavelength division multiplexing technology consists in the multiplexing of different channels corresponding to different wavelengths into one multiplexed signal transmitted along an optical link.

In WDM networks, nodes can be equipped with Optical-Electronic-Optical (OEO) devices able to perform regeneration and conversion of the signal. Conversion allows to switch from one wavelength channel to another if no "transparent" path is found. A "transparent" path corresponds to a path where no conversion or regeneration is needed. Regeneration is needed due to the degradation of the signal during optical transmission. However, the presence of OEO devices affects the cost of the network in proportion of the WDM channels. Thus, it is essential, to reduce the cost of a network, to decrease the numbers of OEO devices and prioritized "transparent" paths.

Due to the physical impairment undergone along "transparent" optical transmission, an estimation of the signal quality has to be performed during the routing of the path to ensure the connection feasibility.

In the state of the art, this signal quality estimation is for example performed by measurements achieved at the network construction. One example of a prior art system can be found in WO2004/019073. Other publications propose such estimation by extrapolating measurements performed on the already active channels along the path. The problem with the first solution is that the preliminary tests can require a huge amount of time in the case of a large network and that these tests cannot take into account network evolutions. The drawback of the second solution is that the correlation between signals with different wavelengths can be low and results in an inaccurate estimation. Thus, the present invention intends to solve the disadvantages of the above solutions by optimizing the estimation of the signal transmission quality.

### SUMMARY OF THE INVENTION

One object of the present invention is to improve the accuracy of the signal quality estimation and is achieved by a method for estimating the quality of transmission of a signal in an optical network, said signal originating from a light source of a source network node and being transmitted on a selected wavelength channel along a selected path composed of at least one link to a destination network node. Said method comprises steps of selecting at least one idle light source of the optical network, activating said idle light source to send test signals, broadcasting test signals through the network and estimating the quality of transmission of a signal at destination network node for a requested path using signal quality measurements achieved on the corresponding test signals. To broadcast test signals, nodes of the optical network may use local optical transmitter modules and/or transparently forward a received test signal.

Preferably, an idle light source is a light source which is not occupied in sending an information data signal.

Advantageously, broadcasting test signals through the network comprises, for a network node receiving a test signal, the steps of:
- checking if said node comprises an idle light source corresponding to the wavelength of the received test signal,
- if said node comprises an idle light source corresponding to the wavelength of the received test signal:
   - activating said idle light source to send test signals,
   - send out test signals on all the adjacent links of said node comprising a channel available at the corresponding wavelength,
- if said node does not comprise an idle light source corresponding to the wavelength of the received test signal:
   - checking if several test signals on the same wavelength channel are received,
   - determining the origin of said received test signals and the length of the corresponding traversed paths,
   - selecting the test signal with the shortest path and forward said selected test signal on all the adjacent links of said node comprising a channel available at the corresponding wavelength.

Alternatively, selecting the test signal with the shortest path comprises selecting test signal with the path having the lowest number of links.

Preferably, broadcasting a signal comprises using optical couplers.

Advantageously, signal quality measurements achieved on test signals comprise optical signal to noise ratio measurements and channel power measurements.

Furthermore, corresponding test signals comprise test signals having a wavelength as close as possible as the selected wavelength.

Advantageously, estimating the quality of transmission of a signal at destination network node for a requested path using signal quality measurements achieved on the corresponding test signals comprises estimating the quality of transmission of a signal at destination network node for a requested path using a combination of signal quality measurements achieved on subpaths along the requested path.

Preferably, light sources of the optical network comprises laser sources.

Furthermore, optical node comprising receiver modules for receiving a test signal on at least one wavelength channel, checking means for checking if said network node comprises an idle light source corresponding to the wavelength of the received test signal, activation means for activating said idle light source to send test signals at the same wavelength on at least one adjacent link of the node comprising a channel available at the corresponding wavelength, if said node comprises an idle light source corresponding to the wavelength of the received test signal, a transparent transit section for transparently forwarding optical signals between input ports and output ports of said node, said transit section including wavelength switches, and control means for controlling the wavelength switches so as to forward the received test signal on at least one adjacent link of the node comprising a channel available at the corresponding wavelength, in response to the checking means detecting that the node does not comprise a corresponding idle light source.

Preferably, said optical node further comprises checking means for checking if several test signals on the same wavelength channel are received, if said node does not comprise an idle light source corresponding to the wavelength of the received test signal, determination means for determining the origin of said received test signals and the length of the corresponding traversed paths, and selection means for selecting the test signal with the shortest path and optical couplers to forward said selected test signal on all the adjacent links of said node comprising a channel available at the corresponding wavelength.

### BRIEF DESCRIPTION OF THE DRAWINGS

FIG.**1** is a block diagram representing the general broadcasting steps of the present method;
FIG.**2** is a diagram of an optical network;
FIG.**3** is a chart representing the different broadcasting steps;
FIG.**4** is a diagram of a possible node architecture comprising a plurality of optical couplers allowing full-broadcasting ability of a node;
FIG.**5** is a diagram focusing on a part of the optical network represented on Fig.2.

### DETAILED DESCRIPTION OF THE INVENTION

As used herein, the term "link" refers to a set of successive transmitting network elements (optical fibers, optical amplifiers) located between two network nodes.

As used herein, the terms "transparent path" or "transparent network" refer to path or network where signals are transmitted in the optical/photonic domain without conversion to electronic.

As used herein, the term "idle light source" refers to light sources that are not occupied in sending information data signals, where information can be for example audio, video, graphics files (in uncompressed or compressed format), icons, softwares, text files and scripts, data and binary files.

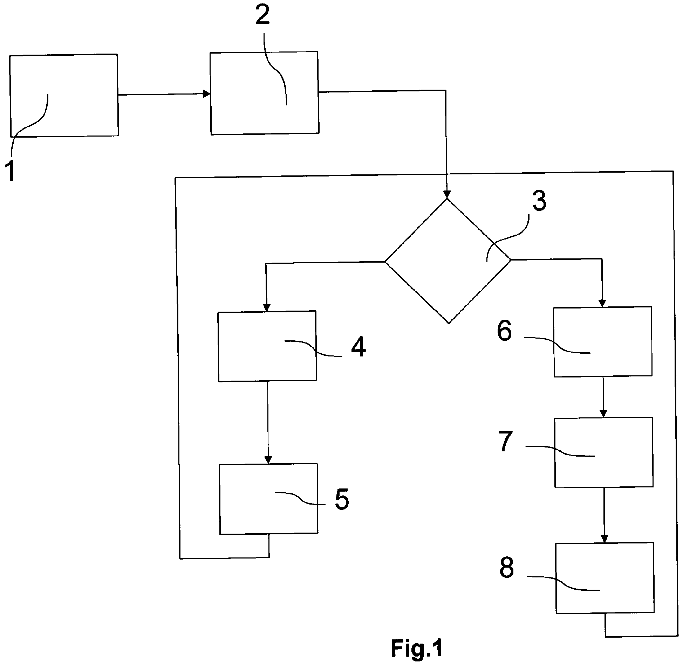

The general method is presented in Fig.1, where each box corresponds to a step of the present method. The first step of said method consists in selecting at least one, preferentially all the available idle light sources of the network in so far as the corresponding channels are available on the outgoing links (step 1). Said idle light sources are then activated to send test signals to all the adjacent links having the corresponding wavelength channel available (step 2). For each node receiving a test signal, a check is made to determine if said node has an idle source corresponding to the wavelength of the received test signal (step 3). If it is the case, said idle light source is activated (step 4) and test signals are sent to all the adjacent links having the corresponding wavelength channel available (step 5).

Otherwise, if said node does not comprise an idle light source corresponding to the wavelength of the received test signal, a check is made to determine if said node receives other test signals on the same wavelength channel (step 6). For each of these received test signals, their origin and the length of their corresponding traversed paths is determined (step 7). The one coming from the closest node is selected and forwarded on all the adjacent links of said node comprising a channel available at the corresponding wavelength (step 8).

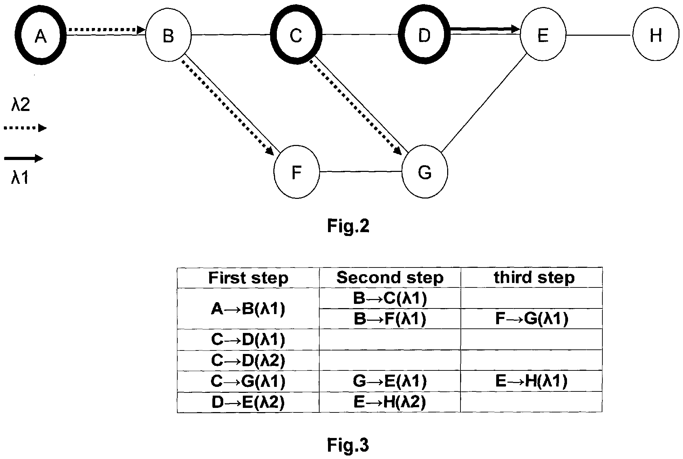

To illustrate the present method, an optical network comprising several links is represented on Fig.2. The different steps of the present method will be presented based on this optical network. In this network, two wavelengths λ1 and λ2 exist.

The arrows on the diagram indicate channels already occupied meaning not available in case of a connection request along the path, continuous arrow corresponds to wavelength λ1 and dotted arrows correspond to wavelength λ2. Nodes represented with a thick circle (A, C and D) comprise light sources able to produce optical signals at both wavelengths λ1 and λ2. The other nodes (B, F, G, E and H) do not have light sources and can only forward received signals. Nevertheless, network nodes comprising light sources can also transparently forward received optical signals.

In the present example, only signals going from the left hand side to the right hand side of the network represented on Fig.1 will be studied. This example is simplified for clarity purposes. Indeed in practice, any node would be equipped with light sources but signal regeneration is not always possible so that the node can also transmit the signal transparently. Besides, in a core network all the connections are bidirectional and test signals would be broadcasted in all directions.

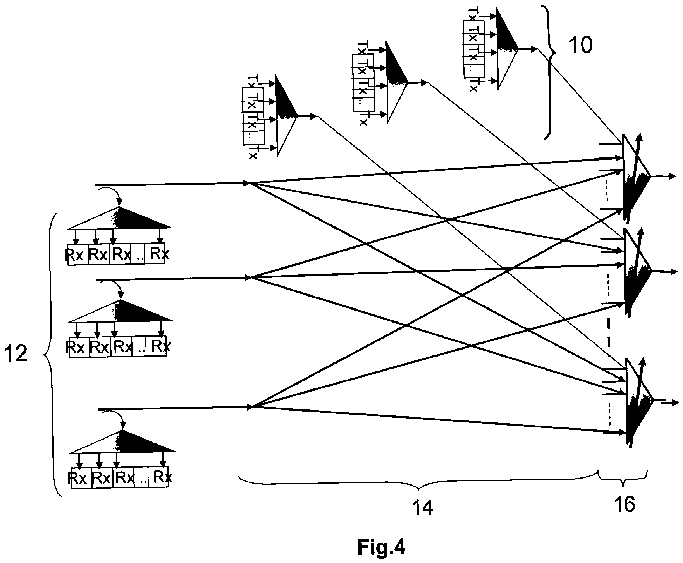

In each network node, to forward signals to the other network nodes, optical components like optical switches, multiplexers and optical couplers are used. Fig.4 illustrates an example of a node structure. Said structure comprises a set of transmitter modules 10 comprising light sources and a set of receiver modules 12, both linked to a transparent transit section, including a plurality of couplers 14 and wavelength selective switches (WSS) 16, allowing a full-broadcasting ability. The number of receiver modules, transmitter modules and wavelength selective switches WSS corresponds to the number of adjacent links and each of them can deal with several wavelength channels. Such architectures are described for example in "Optical cross-connect switch using programmable multiplexers/demultiplexers", D.M.Marom (US patent application 20020197000) and in "1D MEMS-Based Wavelength Switching Subsystems", Steve Mechels, Lilac Muller, G.Dave Morley, and Doug Tillet, Network Photonics Inc, IEEE communication magazine, march 2003.

The first step of the present method consists in selecting at least one, preferentially all available idle light sources of the network in so far as the corresponding channels are available on the at least one of the outgoing links. Light sources generally comprise laser sources. In the network of Fig.2, these idle lasers are located in network nodes A and C at the wavelength λ1 (the light sources corresponding to wavelength λ2 in these nodes being already activated to send data signals (dotted arrows)) and in network node D at the wavelength λ2 (the light source corresponding to wavelength λ1 in this node being already activated to send data signals (continuous arrow)). In general, a network node comprises several light sources at a given wavelength (one per adjacent link for example on Fig.4) so that other idle sources can exist, in network nodes A and C at wavelength λ2 for example. Test signals are then sent from each idle laser to all the adjacent links of the node where the corresponding wavelength channel is available. This is the first broadcasting step illustrated on Fig.3 in the first column.

Network node B receives a test signal from A at wavelength λ1, the quality of this received test signal is measured and memorized which is the case for any node receiving a test signal. As network node B has no idle laser source at this wavelength and does not receive other test signals at the same wavelength, network node B forwards the test signal to the adjacent nodes C and F thanks to optical couplers 14.

Network node C receives said test signal from B at wavelength λ1 but network node C has an idle laser source at this wavelength and therefore uses this idle laser source to send test signals to network nodes D and G so that the test signal from B is not forwarded. Network node C can also send a test signal to network node D at wavelength λ2 if network node C comprises more than one light source at wavelength λ2. This signal would not be forwarded by network node D because network node D has already an idle source at wavelength λ2 but a signal quality value from C to D is measured and stored in a memory, for example, of the node.

Network node F also receives said test signal from network node B at wavelength λ1, said network node F has no laser source and do not receive other test signals at the same wavelength so network node F forward the signal to network node G. Network node G is already receiving a test signal from network node C at wavelength λ1. A comparison between both test signals received by network node G is performed to determined the one coming from the nearest source. This selection is performed in order to select the test signal with the best quality in order to provide a better estimation of the signal degradation. In the present example, test signal coming from network node C has the shortest path and is therefore selected and forwarded to network node E.

Network node E is already receiving a test signal from network node D but on the channel corresponding to wavelength λ2. Then, network node E will forward both test signals (from D at wavelength λ2 and from G at wavelength λ1) to network node H.

Network node C sends also a test signal to network node D at wavelength λ1 but network node D is already sending an information data signal (represented by the continuous arrow on Fig.2) to network node E at wavelength λ1 and therefore cannot forward said test signal toward network node E. Test signals of the present example are represented in Fig.3 where each column corresponds to a step of the broadcasting from laser sources to the rest of the network.

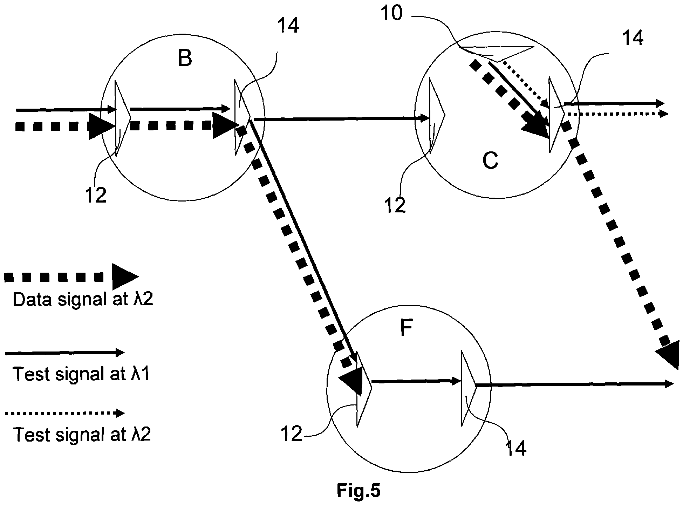

To better understand the broadcast process, Fig. 5 represents a part of the network of Fig.2 and the associated optical signals. Thick arrows represent data signals and thin arrows represent test signals (dotted arrows still correspond to wavelength λ2 and continuous arrows to wavelength λ1). Node C has a structure equivalent to the one presented on Fig.4 with three adjacent links and therefore a set of three receiver modules 12, three transmitter modules 10 and three wavelength selective switches (WSS) 16. Nodes B and F may have a similar architecture, although they are represented without transmitter modules 10 because of the assumption made previously that they have no light sources available and can only forward received signals. In an embodiment, network node B may be receiving and demodulating the signals in receiver modules 12 at the same time as forwarding them, i.e. operating in a drop and continue mode.

Thus, thanks to test signal broadcasting, signal quality measurements can be performed on real signals having the same wavelength or a wavelength very close to the one of the signal needing to be sent. For example, if a request to send a signal from network node A to network node H is received, a routing method selects the optimal path, ABCGEH on the channel corresponding to wavelength λ1 in the present case. This path is transparent and the quality of the signal in network node H needs to be estimated to ensure the physical feasibility of the transmission. Thanks to the test signals, this estimation can be done on the wavelength channel corresponding to the selected path. In the present example, to estimate the signal quality, stored quality values of the measurements performed on the test signal from network node A to network node C on one hand and on the test signal from network node C to network node H on the other hand are used.

From these stored values an estimation of the signal quality on the transparent path from network node A to network node H is achieved by combining said stored values. Indeed, as the tested light-paths at a given wavelength are established according to the transmitter module presences, wavelength availability and the priority rules (for transparent forwarding), it is unlikely that a candidate transparent connection would have been entirely evaluated from its source node to its destination node by a previous test signal. In most cases, the validation of the requested transparent light-path will be carried out by the way of measurements performed on sub light-paths. The chromatic dispersion, the accumulation of amplified spontaneous emission (accounted for by the way of the optical signal to noise ratio (OSNR) parameter), the polarization dispersion mode (PMD) and the non-linear phase are the main parameters of the quality of transmission (QoT) function. They have been selected because of the additive property which means that one can establish them on an entire light-path by adding up the corresponding values of the sub-light-paths making up the whole light-path. The QoT function concept is presented in "Dimensioning of WDM transparent networks based on the QoT function" T. Zami, J.-C. Antona, P. Peloso, E. Le Rouzic, A. Morea, M. Joindot, B. Fracasso, P. Gravey, M.Gagnaire, presented at the Broadband Europe conference on december 9th, 2004 in Brugge, Belgium.

This estimation is therefore more accurate than an estimation based on measurements performed on a channel corresponding to another wavelength, very different from the selected one. If the estimation matches with the quality requirements, the laser source corresponding to wavelength λ1 of network node A stops sending test signals and starts sending the requested signal along the path determined by the routing method. In a known manner, optical nodes along the path are configured to transparently forward the signal to its destination.

In a real network, test signals are broadcasted in all directions. In the present example, this would result in test signals going from H to A and would allow estimation of the signal transmission quality from H to A for example.

This is primarily a method to be used as a prediction tool for a whole network or a network domain. It can be used at one wavelength or several wavelengths. After having established test signals, the quality value of a test signal is stored and new signal quality value determination is achieved either permanently or temporarily after a predetermined amount of time (for example once a day, a week or a month) to update said signal quality values as needed depending on traffic evolution rate.

Thus, the present method allows to improve the accuracy of the estimation of the signal transmission quality through the network without modifying the structure of the network and therefore its cost.

Moreover, the present method will artificially increase the occupation ratio of the optical fibers in terms of wavelength channels. This will result in a steadier regime for the transparent network which is important due to the sensitivity of some optical devices (for instance the optical amplifiers) to the variation of the wavelength domain they process.

## Claims

1. Method for estimating the quality of transmission of a signal in an optical network comprising a plurality of links, said signal originating from a light source of a source network node and being transmitted on a selected wavelength channel along a selected path composed of at least one link to a destination network node, wherein said method comprises steps of :
- selecting at least one idle light source of the optical network (step 1),
- activating said idle light source to send test signals (step 2),
- broadcasting test signals through links of the network,
- estimating the quality of transmission of a signal at destination network node for a requested path using signal quality measurements achieved on the corresponding test signals wherein the step of broadcasting comprises transmitting test signals to all adjacent links having a corresponding wavelength channel available.

2. Method for estimating the quality of transmission of a signal in an optical network in accordance with claim 1, wherein an idle light source is a light source which is not occupied in sending an information data signal.

3. Method for estimating the quality of transmission of a signal in an optical network in accordance with claims 1 or 2, wherein broadcasting test signals through the network comprises, for a network node receiving a test signal, the steps of :
- checking if said node comprises an idle light source corresponding to the wavelength of the received test signal (step 3),
- if said node comprises an idle light source corresponding to the wavelength of the received test signal:
- activating said idle light source to send test signals (step 4),
- send out test signals on all the adjacent links of said node comprising a channel available at the corresponding wavelength (step 5),
- if said node does not comprise an idle light source corresponding to the wavelength of the received test signal:
- checking if several test signals on the same wavelength channel are received (step 6),
- determining the origin of said received test signals and the length of the corresponding traversed paths (step 7),
- selecting the test signal with the shortest path and forward said selected test signal on all the adjacent links of said node comprising a channel available at the corresponding wavelength (step 8).

4. Method for estimating the quality of transmission of a signal in an optical network in accordance with claim 3, wherein selecting the test signal with the shortest path comprises selecting test signal with the path having the lowest number of links.

5. Method for estimating the quality of transmission of a signal in an optical network in accordance with one of the previous claims, wherein broadcasting a signal comprises using optical couplers (14).

6. Method for estimating the quality of transmission of a signal in an optical network in accordance with one of the previous claims, wherein signal quality measurements achieved on test signals comprise optical signal to noise ratio measurements and channel power measurements.

7. Method for estimating the quality of transmission of a signal in an optical network in accordance with one of the previous claims, wherein corresponding test signals comprise test signals having a wavelength as close as possible as the selected wavelength.

8. Method for estimating the quality of transmission of a signal in an optical network in accordance with one of the previous claims, wherein estimating the quality of transmission of a signal at destination network node for a requested path using signal quality measurements achieved on the corresponding test signals comprises estimating the quality of transmission of a signal at destination network node for a requested path using a combination of signal quality measurements achieved on subpaths along the requested path.

9. Method for estimating the quality of transmission of a signal in an optical network in accordance with one of the previous claims, wherein light sources of the optical network comprises laser sources.

10. Optical node comprising:
- receiver modules (12) for receiving a test signal on at least one wavelength channel,
- checking means for checking if said network node comprises an idle light source corresponding to the wavelength of the received test signal,
- activation means for activating said idle light source to send test signals at the same wavelength on all adjacent links of the node comprising a channel available at the corresponding wavelength, if said node comprises an idle light source corresponding to the wavelength of the received test signal,
- a transparent transit section for transparently forwarding optical signals between input ports and output ports of said node, said transit section including wavelength switches, and
- control means for controlling the wavelength switches so as to forward the received test signal on all adjacent links of the node comprising a channel available at the corresponding wavelength, in response to the checking means detecting that the node does not comprise a corresponding idle light source.

11. Optical node in accordance with claim 10 wherein said optical node further comprises:
- checking means for checking if several test signals on the same wavelength channel are received, if said node does not comprise an idle light source corresponding to the wavelength of the received test signal,
- determination means for determining the origin of said received test signals and the length of the corresponding traversed paths,
- selection means for selecting the test signal with the shortest path and optical couplers (14) to forward said selected test signal on all the adjacent links of said node comprising a channel available at the corresponding wavelength.

## Patentansprüche

1. Verfahren für das Schätzen der Qualität der Übertragung eines Signals in einem optischen Netzwerk, welches eine Vielzahl von Links umfasst, wobei besagtes Signal von einer Lichtquelle eines Queltnetzwerkknotens ausgeht und auf einem ausgewählten Wellenlängenkanal über einen ausgewählten, aus mindestens einem Link bestehenden Pfad zu einem Zielknoten übertragen wird, wobei besagtes Verfahren die folgenden Schritte umfasst:
- das Auswählen mindestens einer im Ruhezustand befindlichen Lichtquelle des optischen Netzwerks (Schritt 1),
- das Aktivieren besagter im Ruhezustand befindlicher Lichtquelle zum Senden von Testsignalen (Schritt 2),
- das Senden von Testsignalen über Links des Netzwerks,
- das Schätzen der Übertragungsqualität eines Signals am Zielnetzwerkknoten für einen angeforderten Pfad unter Verwendung von Signalqualitätsmessungen, die mit dem entsprechenden Testsignal erlangt wurden, wobei der Schritt des Sendens das Übermitteln des Testsignals an alle angrenzenden Links umfasst, bei denen ein entsprechender Wellenlängenkanal verfügbar ist.

2. Verfahren für das Schätzen der Qualität der Übertragung eines Signals in einem optischen Netzwerk nach Anspruch 1, wobei eine im Ruhezustand befindliche Lichtquelle eine Lichtquelle ist, die nicht mit dem Senden eines Informationsdatensignals beschäftigt ist.

3. Verfahren für das Schätzen der Qualität der Übertragung eines Signals in einem optischen Netzwerk nach Anspruch 1 oder 2, wobei das Senden von Testsignalen über das Netzwerk für einen ein Testsignal empfangenden Netzwerkknoten die folgenden Schritte umfasst:
- das Prüfen, ob besagter Knoten eine im Ruhezustand befindliche Lichtquelle umfasst, die der Wellenlänge des empfangenen Testsignals entspricht (Schritt 3),
- wenn besagter Knoten eine im Ruhezustand befindliche Lichtquelle umfasst, die der Wellenlänge des empfangenen Testsignals entspricht:
- das Aktivieren besagter, im Ruhezustand befindlicher Lichtquelle zum Senden von Testsignalen (Schritt 4),
- das Senden von Testsignalen auf allen an besagten Knoten angrenzenden Links, die einen verfügbaren Kanal auf der entsprechenden Wellenlänge umfassen (Schritt 5),
- wenn besagter Knoten keine im Ruhezustand befindliche Lichtquelle umfasst, die der Wellenlänge des empfangenen Testsignals entspricht:
- das Prüfen, ob mehrere Testsignale desselben Wellenlängenkanals empfangen werden (Schritt 6),
- das Bestimmen des Ursprungs der besagten, empfangenen Testsignale und der Länge der entsprechenden durchlaufenen Pfade (Schritt 7),
- das Auswählen des Testsignals mit dem kürzesten Pfad und das Weiterleiten des besagten, ausgewählten Testsignals an alle an besagten Knoten angrenzenden Links, die einen verfügbaren Kanal auf der entsprechenden Wellenlänge umfassen (Schritt 8)

4. Verfahren für das Schätzen der Qualität der Übertragung eines Signals in einem optischen Netzwerk nach Anspruch 3, wobei das Auswählen des Testsignals mit dem kürzesten Pfad das Auswählen des Testsignals mit dem Pfad mit der niedrigsten Zahl von Links umfasst.

5. Verfahren für das Schätzen der Qualität der Übertragung eines Signals in einem optischen Netzwerk nach einem der vorgenannten Ansprüche, wobei das Senden eines Signals die Verwendung optischer Koppler (14) umfasst.

6. Verfahren für das Schätzen der Qualität der Übertragung eines Signals in einem optischen Netzwerk nach einem der vorgenannten Ansprüche, wobei die anhand von Testsignalen erlangten Signalqualitätsmessungen Messungen des optischen Signal-Rausch-Verhältnisses und Messungen der Kanalleistung umfassen.

7. Verfahren für das Schätzen der Qualität der Übertragung eines Signals in einem optischen Netzwerk nach einem der vorgenannten Ansprüche, wobei die entsprechenden Testsignale solche Testsignale umfassen, deren Wellenlänge der ausgewählten Wellenlänge so nah wie möglich kommt.

8. Verfahren für das Schätzen der Qualität der Übertragung eines Signals in einem optischen Netzwerk nach einem der vorgenannten Ansprüche, wobei das Schätzen der Qualität der Übertragung eines Signals am Zielnetzwerkknoten für einen angeforderten Pfad anhand von Signalqualitätsmessungen anhand des entsprechenden Testsignals das Schätzen der Qualität der Übertragung eines Signals am Zielnetzwerkknoten für einen angeforderten Pfad anhand einer Kombination von Signalqualitätsmessungen erfolgt, die auf Teilpfaden entlang dem angeforderten Pfad ermittelt wurden.

9. Verfahren für das Schätzen der Qualität der Übertragung eines Signals in einem optischen Netzwerk nach einem der vorgenannten Ansprüche, wobei die Lichtquelle des optischen Netzwerks Laserquellen umfassen.

10. Optischer Knoten, umfassend:
- Empfängermodule (12) für den Empfang eines Testsignals auf dem mindestens einen Wellenlängenkanal,
- Prüfmittel für das Prüfen, ob besagter Netzwerkknoten eine im Ruhezustand befindliche Lichtquelle umfasst, die der Wellenlänge des empfangenen Testsignals entspricht,
- Aktivierungsmittel für das Aktivieren besagter, im Ruhezustand befindlicher Lichtquelle für das Senden von Testsignalen auf der selben Wellenlänge auf allen an besagten Knoten angrenzenden Links, die einen verfügbaren Kanal auf der entsprechenden Wellenlänge umfassen, wenn besagter Knoten eine im Ruhezustand befindliche Lichtquelle umfasst, die der Wellenlänge des empfangenen Testsignals entspricht,
- einen transparenten Transitabschnitt für das transparente Weiterleiten optischer Signale zwischen Eingängen und Ausgängen besagten Knotens, wobei besagter Transitabschnitt Wellenlängenschalter umfassen, und
- Steuermittel für das dergestalt erfolgende Steuern der Wellenlängenschalter, dass das empfangene Testsignal auf allen an den Knoten angrenzenden Links erfolgt, die einen verfügbaren Kanal auf der entsprechenden Wellenlänge haben, was in Reaktion darauf erfolgt, das die Prüfmittel feststellen, dass der Knoten keine entsprechende, im Ruhezustand befindliche Lichtquelle umfasst.

11. Optischer Knoten nach Anspruch 10, wobei besagter optischer Knoten weiterhin umfasst:
- Prüfmittel für das Prüfen, ob mehrere Testsignale desselben Welkenlängenkanals empfangen werden, wenn besagter Knoten keine im Ruhezustand befindliche Lichtquelle umfasst, die der Wellenlänge des empfangenen Testsignals entspricht,
- Bestimmungsmittel für das Bestimmen des Ursprungs der besagten, empfangenen Testsignale und der Länge der entsprechenden durchlaufenen Pfade,
- Auswahlmittel für das Auswählen des Testsignals mit dem kürzesten Pfad und der optischen Koppler (14) für das Weiterleiten des besagten, ausgewählten Testsignals an alle an besagten Knoten angrenzenden Links, die einen verfügbaren Kanal auf der entsprechenden Wellenlänge umfassen.

## Revendications

1. Procédé pour estimer la qualité de transmission d'un signal dans un réseau optique comprenant une pluralité de liaisons, ledit signal provenant d'une source de lumière d'un noeud de réseau source et étant transmis sur un canal de longueur d'onde sélectionné le long d'un trajet sélectionné composé d'au moins une liaison vers un noeud de réseau de destination, ledit procédé comprenant les étapes suivantes :
- sélectionner au moins une source de lumière inactive du réseau optique (étape 1),
- activer ladite source de lumière inactive pour envoyer des signaux de test (étape 2),
- diffuser des signaux de test à travers des liaisons du réseau,
- estimer la qualité de transmission d'un signal au niveau du noeud de réseau de destination pour un trajet demandé en utilisant des mesures de qualité de signal réalisées sur les signaux de test correspondants, l'étape de diffusion comprenant la transmission de signaux de test à toutes les liaisons adjacentes ayant un canal de longueur d'onde correspondant disponible.

2. Procédé pour estimer la qualité de transmission d'un signal dans un réseau optique selon la revendication 1, dans lequel une source de lumière inactive est une source de lumière qui n'est pas occupée à envoyer un signal de données d'information.

3. Procédé pour estimer la qualité de transmission d'un signal dans un réseau optique selon les revendications 1 ou 2, dans lequel la diffusion de signaux de test à travers le réseau comprend, pour un noeud de réseau recevant un signal de test, les étapes suivantes :
- vérifier si ledit noeud comprend une source de lumière inactive correspondant à la longueur d'onde du signal de test reçu (étape 3),
- si ledit noeud comprend une source de lumière inactive correspondant à la longueur d'onde du signal de test reçu :
- activer ladite source de lumière inactive pour envoyer des signaux de test (étape 4),
- émettre des signaux de test sur toutes les liaisons adjacentes dudit noeud comprenant un canal disponible au niveau de la longueur d'onde correspondante (étape 5),
- si ledit noeud ne comprend pas une source de lumière inactive correspondant à la longueur d'onde du signal de test reçu :
- vérifier si plusieurs signaux de test sur le même canal de longueur d'onde sont reçus (étape 6),
- déterminer l'origine desdits signaux de test reçus et la longueur des trajets traversés correspondants (étape 7),
- sélectionner le signal de test avec le trajet le plus court et transférer ledit signal de test sélectionné sur toutes les liaisons adjacentes dudit noeud comprenant un canal disponible au niveau de la longueur d'onde correspondante (étape 8).

4. Procédé pour estimer la qualité de transmission d'un signal dans un réseau optique selon la revendication 3, dans lequel la sélection du signal de test avec le trajet le plus court comprend la sélection du signal de test avec le trajet ayant le plus petit nombre de liaisons.

5. Procédé pour estimer la qualité de transmission d'un signal dans un réseau optique selon l'une quelconque des revendications précédentes, dans lequel la diffusion d'un signal comprend l'utilisation de coupleurs optiques (14).

6. Procédé pour estimer la qualité de transmission d'un signal dans un réseau optique selon l'une quelconque des revendications précédentes, dans lequel des mesures de qualité de signal réalisées sur des signaux de test comprennent des mesures de rapport signal sur bruit optiques et des mesures de puissance de canal.

7. Procédé pour estimer la qualité de transmission d'un signal dans un réseau optique selon l'une quelconque des revendications précédentes, dans lequel des signaux de test correspondants comprennent des signaux de test ayant une longueur d'onde aussi proche que possible de la longueur d'onde sélectionnée.

8. Procédé pour estimer la qualité de transmission d'un signal dans un réseau optique selon l'une quelconque des revendications précédentes, dans lequel l'estimation de la qualité de transmission d'un signal au niveau du noeud de réseau de destination pour un trajet demandé en utilisant des mesures de qualité de signal réalisées sur les signaux de test correspondants comprend l'estimation de la qualité de transmission d'un signal au niveau du noeud de réseau de destination pour un trajet demandé en utilisant une combinaison de mesures de qualité de signal réalisées sur des sous-trajets le long du trajet demandé.

9. Procédé pour estimer la qualité de transmission d'un signal dans un réseau optique selon l'une quelconque des revendications précédentes, dans lequel des sources de lumière du réseau optique comprennent des sources laser.

10. Noeud optique comprenant :
- des modules de récepteur (12) pour recevoir un signal de test sur au moins un canal de longueur d'onde,
- des moyens de vérification pour vérifier si ledit noeud de réseau comprend une source de lumière inactive correspondant à la longueur d'onde du signal de test reçu,
- des moyens d'activation pour activer ladite source de lumière inactive pour envoyer des signaux de test à la même longueur d'onde sur toutes les liaisons adjacentes du noeud comprenant un canal disponible au niveau de la longueur d'onde correspondante, si ledit noeud comprend une source de lumière inactive correspondant à la longueur d'onde du signal de test reçu,
- une section de transit transparente pour transférer de manière transparente des signaux optiques entre des ports d'entrée et des ports de sortie dudit noeud, ladite section de transit incluant des commutateurs de longueur d'onde, et
- des moyens de commande pour commander les commutateurs de longueur d'onde afin de transférer le signal de test reçu sur toutes les liaisons adjacentes du noeud comprenant un canal disponible au niveau de la longueur d'onde correspondante, en réponse aux moyens de vérification détectant que le noeud ne comprend pas une source de lumière inactive correspondante.

11. Noeud optique selon la revendication 10, ledit noeud optique comprenant en outre :
- des moyens de vérification pour vérifier si plusieurs signaux de test sur le même canal de longueur d'onde sont reçus, si ledit noeud ne comprend pas une source de lumière inactive correspondant à la longueur d'onde du signal de test reçu,
- des moyens de détermination pour déterminer l'origine desdits signaux de test reçus et la longueur des trajets traversés correspondants,
- des moyens de sélection pour sélectionner le signal de test avec le trajet le plus court et des coupleurs optiques (14) pour transférer ledit signal de test sélectionné sur toutes les liaisons adjacentes dudit noeud comprenant un canal disponible au niveau de la longueur d'onde correspondante.
